# FASCICULE DE BREVET EUROPEEN

(11) **EP 4 453 151 B1**
(45) Date de publication et mention de la délivrance du brevet: **28.01.2026**
(21) Numéro de dépôt: 22840728.4
(22) Date de dépôt: 20.12.2022
(51) Int. Cl.: C10M 107/50

(54) **UTILISATION D'UNE HUILE DE BASE POLYALCOXYSILOXANES EN TANT QU'AGENT LUBRIFIANT**
VERWENDUNG EINES ÖLS AUF POLYALKOXYSILOXANBASIS ALS SCHMIERMITTEL
USE OF A POLYALKOXYSILOXANE-BASED OIL AS A LUBRICATING AGENT

(30) Priorité: 21.12.2021 FR 2114153
(43) Date de publication de la demande: 30.10.2024
(73) Titulaire: NYCO, 75008 Paris (FR)
(72) Inventeur: CORBUN, Christophe, 95690 Nesles-la-Vallée (FR); MANSOUX, Jean-Louis, 95130 Le Plessis-Bouchard (FR); LOUISE, Christelle, 78800 Houilles (FR); HERVÉ, Grégoire, 75012 Paris (FR)
(74) Mandataire: Jacobacci Coralis Harle
(86) Numéro de dépôt international: PCT/EP2022/087059
(87) Numéro de publication internationale: WO 2023/118190

(56) Documents cités:
- EP-A1- 3 692 120
- EP-A2- 0 475 440
- US-B2- 10 011 801

## Description

### DOMAINE TECHNIQUE

La présente invention concerne le domaine technique des lubrifiants, en particulier des huiles de base pour applications lubrifiantes.

### ARRIERE-PLAN TECHNOLOGIQUE

Dans ce domaine, une composition lubrifiante est généralement composée d'une huile de base à laquelle est ajouté un certain nombre d'additifs permettant d'ajuster les propriétés telles que par exemple le moussage, la résistance à la corrosion, la résistance à l'oxydation (via des anti-oxydants) et la résistance à l'usure (via des additifs anti-usure ou extrême pression).

Les huiles silicones, autrement appelées polydiméthylsiloxanes (PDMS), sont employées comme huiles de base dans certaines applications industrielles, notamment comme lubrifiant ou fluide diélectrique, en cosmétique ou en instrumentation. Leur principal avantage concerne leur bonne fluidité, notamment à basse température, qui se caractérise par un indice de viscosité élevé. La chimie des silicones est aussi reconnue pour avoir une résistance thermique et un comportement au feu intéressants, offrant à l'usager un très bon niveau de sécurité en opération.

Par ailleurs, ce type de chimie se distingue également par un aspect toxicologique significativement amélioré en regard de celui d'autres chimies telles que les PolyAlphaOléfines (dont certains grades peuvent être mortels en cas d'ingestion et de pénétration dans les voies respiratoires) ou bien encore des Phosphate esters qui, de surcroît, sont cancérigènes de catégorie 2 à cause du n-tributylphosphate.

Néanmoins, les huiles silicones, notamment les PDMS, présentent un très faible pouvoir lubrifiant, comme décrit notamment dans la publication E.D. Brown, Methyl Alkyl Silicones, A New Class of Lubricants, Asle Trans. 1966, 9, 31-35. En outre, les huiles silicones, notamment les PDMS, présentent une faible compatibilité avec d'autres composants, notamment une très faible compatibilité avec les additifs classiquement utilisés dans le domaine. Ainsi, il est difficile de modifier de façon substantielle les propriétés des huiles silicones en y ajoutant des additifs comme c'est généralement le cas dans le domaine des compositions lubrifiantes.

Le document US10,011,801 décrit un procédé pour copolymériser des polyalkylphénylsiloxanes et des alkylfluoroalkylsiloxanes, le copolymère résultant ayant des propriétés lubrifiantes. Le copolymère formé comprend ainsi des groupes R¹ perfluorés.

Le document WO 2020/020476 concerne la fourniture d'une nouvelle graisse hybride à faibles coefficients de frottement et à haute protection contre l'usure, qui peut être utilisée dans une large plage de températures. La nouvelle graisse hybride est à base d'une combinaison de graisse à base d'huile de silicone associée à une graisse à base d'huiles hydrocarbonées synthétiques, d'huiles minérales ou de polyglycols.

Le document EP 0 475 440 décrit un procédé de préparation d'un composé organopolysiloxane substitué par un groupement alcoxy supérieur (comprenant au moins 4 atomes de carbone lié à l'atome de silicium) aptes à être utilisées comme ingrédient dans une grande variété de produits de toilette et cosmétiques.

Dans ce cadre, la Demanderesse a développé une nouvelle famille de dérivés polyalcoxysiloxanes ayant des propriétés de lubrification nettement meilleures que celles des polydiméthylsiloxanes, et conservant en revanche d'autres propriétés physico-chimiques intéressantes dans des gammes proches de celles des polydiméthylsiloxanes, comme par exemple un indice de viscosité élevé, une résistance thermique élevée et un comportement d'ininflammabilité. Ces dérivés polyalcoxysiloxanes présentent en outre une compatibilité avec les autres composants, en particulier avec les additifs et les autres familles d'huiles de base synthétiques et minérales, contrairement aux polydiméthylsiloxanes usuels, ce qui permet d'étendre avantageusement leur utilisation en offrant la possibilité de modifier, ajuster et/ou optimiser les propriétés des compositions lubrifiantes dont l'huile de base comprend un tel polyalcoxysiloxane.

### RESUME DE L'INVENTION

La présente invention est décrite dans et par les revendications annexées.

La présente invention concerne l'utilisation d'une huile de base polyalcoxysiloxane de formule (I) : 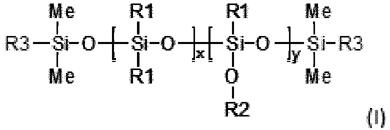 dans laquelle
chaque R1 est indépendamment un groupement alkyle en C1 à C4,
chaque R2 est indépendamment un groupement alkyle ou alcényle en C2 à C22 ou un phényle,
R3 est un groupement méthyle,
x est égal à 0,
y est un nombre entier compris entre 1 et 500,

ou d'un mélange d'huiles de base polyalcoxysiloxanes de formule (I),
en tant qu'agent lubrifiant.

D'autres caractéristiques non limitatives et avantageuses de l'utilisation prises individuellement ou selon toutes les combinaisons techniquement possibles, sont les suivantes :
L'huile de base polyalcoxysiloxane comprend un ou plusieurs polyalcoxysiloxanes de formule (I) ;
x vaut 0 et chaque R1 est choisi indépendamment parmi les groupements méthyle, éthyle et phényle, en particulier R1 est choisi indépendamment parmi les groupements méthyle, et éthyle, en général R1 est un groupement méthyle ; typiquement R1 n'est pas un groupement phényle ;
chaque R2 est indépendamment un groupement alkyle ou alcényle en C4 à C18, de préférence en C4 à C12 , en particulier R2 est indépendamment un groupement alkyle en C4 à C18 ; typiquement R2 n'est pas un phényle ;
selon une caractéristique de l'invention, chaque R2 est indépendamment un groupement alkyle ou alcényle en C4 à C22, ou un phényle, généralement lorsque R2 est un groupe phényl, celui-ci représente préférentiellement (en nombre) 70% ou moins, de préférence 60% ou moins et typiquement 50% ou moins du motif répété y fois ;
chaque R3 est un groupement méthyle ;
le polyalcoxysiloxane est choisi dans le groupe constitué par les polyalcoxysiloxanes de formule (I) dans lesquels:
   x=0, y est compris entre 1 et 140, chaque R1 est un méthyle, chaque R3 est un méthyle et chaque R2 est une chaîne n-butyle,
   x=0, y est compris entre 1 et 140, chaque R1 est un méthyle, chaque R3 est un méthyle et chaque R2 est une chaîne heptyle,
   x=0, y est compris entre 1 et 140, chaque R1 est un méthyle, chaque R3 est un méthyle et chaque R2 est une chaîne dodécyle,
   x=0, y est compris entre 1 et 140, chaque R1 est un méthyle, chaque R3 est un méthyle et chaque R2 est une chaîne tétradécyle, et
   x=0, y est compris entre 1 et 140, chaque R1 est un méthyle, chaque R3 est un méthyle et chaque R2 est choisi dans le groupe constitué des chaînes octadécènyle et hexadécyle ;
l'huile de base polyalcoxysiloxane de formule (I) est utilisée en tant qu'agent lubrifiant pour former un fluide diélectrique, un fluide de refroidissement ou un fluide hydraulique ;
l'huile de base polyalcoxysiloxane de formule (I) est utilisée en mélange avec au moins une autre huile de base, en tant que co-base.

L'invention concerne également une composition lubrifiante comprenant une huile de base polyalcoxysiloxane de formule (I) telle que décrite ci-dessus et au moins un additif.

L'huile de base polyalcoxysiloxane comprend un ou plusieurs polyalcoxysiloxanes de formule (II).

De préférence, ledit au moins un additif est choisi dans le groupe constitué par les additifs extrême-pression, les additifs anti-usure, les additifs détergents, les additifs modifiant la viscosité, les additifs anti-mousse, les additifs antioxydants, les retardateurs de flamme, les inhibiteurs de corrosion et une combinaison d'au moins deux desdits additifs.

Avantageusement, ladite composition comprend au moins un additif retardateur de flamme, de sorte à obtenir un fluide hydraulique non inflammable.

L'invention concerne également des polyalcoxysiloxanes de formule (II) : 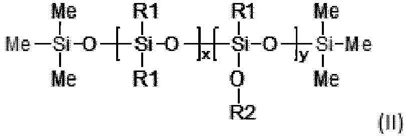 dans laquelle
chaque R1 est indépendamment un groupement alkyle en C1 à C4, tel qu'un groupe méthyl,
chaque R2 est indépendamment un groupement alkyle ou alcényle en C4 à C16, de préférence un groupement alkyle ou alcényle en C4 à C12 ou un phényle,
x vaut 0,
y est un nombre entier compris entre 1 et 500.

Selon une caractéristique de l'invention, chaque R2 est indépendamment un groupement alkyle ou alcényle en C4 à C16, ou un phényle ; préférentiellement lorsque R2 est un groupe phényl, celui-ci représente (en nombre) 70% ou moins, de préférence 60% ou moins et typiquement 50% ou moins du motif répété y fois.

Selon l'invention, « R2 est un groupe phényl, celui-ci représente (en nombre) 70% ou moins du motif répété y fois » comprend les valeurs suivantes (%) et tout intervalle entre ces valeurs : 70 ; 69 ; 68 ; 67 ; 66 ; 65 ; 64 ; 63 ; 62 ; 61 ; 60 ; 59 ; 58 ; 57 ; 56 ; 55 ; 54 ; 53 ; 52 ; 51 ; 50 ; 49 ; 48 ; 47 ; 46 ; 45 ; 44 ; 43 ; 42 ; 41 ; 40 ; 39 ; 38 ; 37 ; 36 ; 35 ; 3 4 ; 33 ; 32 ; 30 ; 25 ; 20 ; 15 ; 10 ; 5, etc.

L'invention concerne enfin des polyalcoxysiloxanes particuliers, choisis dans le groupe constitué des polyalcoxysiloxanes de formule (II) dans lesquels :
x=0, y est compris entre 1 et 140, de préférence entre 40 et 80, chaque R1 est un méthyle, et chaque R2 est une chaîne n-butyle (PAS4),
x=0, y est compris entre 1 et 140, de préférence entre 40 et 80, chaque R1 est un méthyle, et chaque R2 est une chaîne heptyle (PAS7),
x=0, y est compris entre 1 et 140, de préférence entre 40 et 80, chaque R1 est un méthyle, et chaque R2 est une chaîne dodécyle (PAS12),
x=0, y est compris entre 1 et 140, de préférence entre 40 et 80, chaque R1 est un méthyle, chaque R3 est un méthyle et chaque R2 est une chaîne tétradécyle (PAS14), et
x=0, y est compris entre 1 et 140, de préférence entre 40 et 80, chaque R1 est un méthyle, et chaque R2 est choisi dans le groupe constitué des chaînes octadécènyle et hexadécyle (PAS16-18).

Dans la présente invention, sauf précision contraire, le terme « comprendre » et ses dérivés doivent être compris comme non limitatifs et n'excluant pas la présence d'autres composants ou étapes. Dans certains modes de réalisation particulier, le terme « comprendre » peut-être compris comme « être constitué essentiellement de » ou « être constitué de ».

Sauf précision contraire, les intervalles mentionnés dans la présente invention s'entendent bornes incluses.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes avec les autres.

### BREVE DESCRIPTION DE LA FIGURE

De plus, diverses autres caractéristiques de l'invention ressortent de la description annexée effectuée en référence aux dessins qui illustrent des formes, non limitatives, de réalisation de l'invention et où :

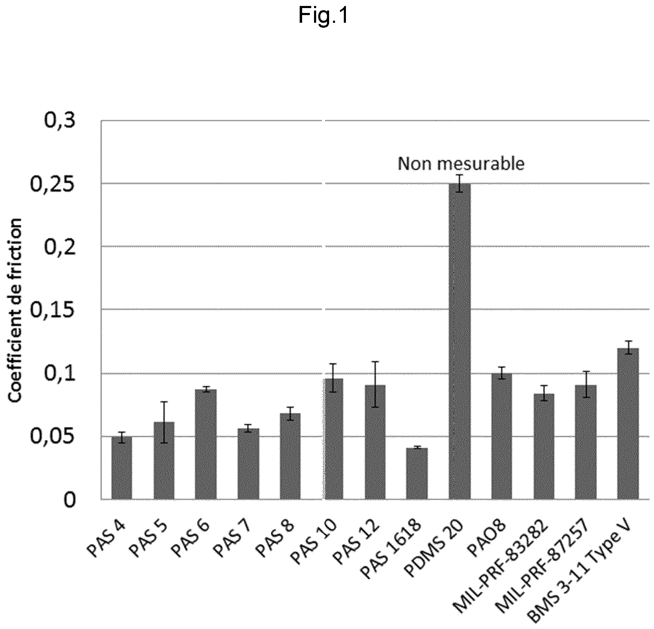

[Fig. 1] présente les résultats de mesure de coefficient de friction pour différents polyalcoxysiloxanes selon l'invention.

### DESCRIPTION DETAILLEE DE L'INVENTION

La présente invention est décrite dans et par les revendications annexées.

La présente invention concerne tout d'abord l'utilisation d'une huile de base polyalcoxysiloxane de formule (I) 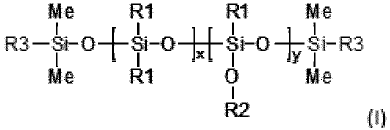 dans laquelle
chaque R1 est indépendamment un groupement alkyle en C1 à C4,
chaque R2 est indépendamment un groupement alkyle ou alcényle en C2 à C22 ou un phényle,
R3 est un groupement méthyle,
x est égal à 0,
y est un nombre entier compris entre 1 et 500,

ou d'un mélange d'huiles de base polyalcoxysiloxanes de formule (I),
en tant qu'agent lubrifiant.

Par « groupement alkyle en Ci à Cj» on entend un groupement hydrocarboné saturé, linéaire, ramifié ou cyclique, comprenant de i à j atomes de carbone, et éventuellement interrompu par un ou plusieurs hétéroatomes, tels que O ou S. Comme exemples de groupements alkyles en C1 à C18 peuvent être cités les groupements méthyle, éthyle, n-propyle, isopropyle, n-butyle, sec-butyle, iso-butyle, tertbutyle, n-pentyle, n-hexyle, cyclohexyle, n-heptyle, n-octyle, n-nonyle, n-décyle, n-undécyle, n-dodécyle, n-tétradécyle, n-hexadécyle et n-octadécènyle. En général, un groupement alkyle en Ci à Cj selon l'invention est un groupement saturé linéaire ou un groupement saturé ramifié, de préférence est un groupement saturé linéaire.

Par « groupement alcényle en Ci à Cj» on entend un groupement hydrocarboné insaturé, linéaire, ramifié ou cyclique, comprenant de i à j atomes de carbone, et éventuellement interrompu par un ou plusieurs hétéroatomes, tels que O ou S. Le groupement alcényle peut comprendre une ou plusieurs insaturations telles que des liaisons doubles entre deux atomes de carbone. De préférence, le groupement alcényle comprend une seule insaturation. De préférence, la ou les insaturations du groupe alcényle sont des liaisons doubles entre deux atomes de carbone. Comme exemples de groupements alcényles en C2 à C18 peuvent être cités les groupements éthényle, propényle, butényle, pentényle, hexényle, cyclohexényle, heptényle, octényle, nonényle, décényle, undécényle, dodécényle, tétradécényle, hexadécényle et octadécènyle. De préférence, un groupement alcényle selon l'invention est linéaire ou ramifié, en particulier linéaire.

Selon l'invention, par « phényle », on entend communément un groupe univalent du benzène comportant six atomes de carbone liés à cinq atomes d'hydrogène.

Dans un mode de réalisation, chaque R1 est indépendamment choisi dans le groupe constitué par un groupement méthyle, un groupement éthyle De préférence, tous les R1 sont des groupements méthyles, ou tous les R1 sont des groupements éthyles En particulier, tous les R1 sont des groupements méthyles.

Dans un mode de réalisation, chaque R2 est indépendamment un groupement alkyle ou alcényle en C2 à C22, de préférence en C2 à C18, de préférence en C4 à C18, de préférence en C4 à C16, de préférence en C4 à C12.

Dans un mode de réalisation, chaque R2 est indépendamment un groupement alkyle en C2 à C22, de préférence en C2 à C18, de préférence en C4 à C18, de préférence en C4 à C16, de préférence en C4 à C12.

Selon l'invention, par un groupe comprenant un nombre de carbone allant de « C2 à C22 », on entend les valeurs suivantes ou tout autre intervalle compris entre ces valeurs : 2 ; 3 ; 4 ; 5 ; 6 ; 7 ; 8 ; 9 ; 1 0 ; 11 ; 12 ; 13 ; 14 ; 15 ; 16 ; 17 ; 18 ; 19 ; 20 ; 21 ; 22.

Les chaînes R2 peuvent être toutes identiques dans le même composé de formule (I), mais elles peuvent également être différentes deux à deux. Notamment, l'utilisation de chaînes R2 de longueurs différentes dans le même composé de formule (I) peut permettre de cumuler les avantages en termes de propriétés des composés de formule (I) avec des chaînes R2 de chacune des longueurs.

Selon un mode de réalisation, dans le même composé de formule (I), toutes les chaînes R2 sont identiques.

Selon un autre mode de réalisation, dans le même composé de formule (I), les chaînes R2 sont différentes. Selon ce mode, chaque R2 est indépendamment un groupement alkyle ou alcényle en C2 à C18, de préférence en C2 à C16, typiquement en C2 à C14, tel qu'en C7, et un groupe phényl. Préférentiellement, lorsqu'il est présent au sein du composé de formule (I), le groupe phényl représente (en nombre) 70% ou moins, de préférence 60% ou moins, et typiquement 50% ou moins du motif répété y fois. A titre d'exemple, R2 est indépendamment un groupement alkyle en C2 à C18, de préférence en C2 à C16, typiquement en C2 à C14, tel qu'en C7, et un groupe phényl, ce dernier représentant, en nombre, 50% ou moins du motif répété y fois.

Selon l'invention chaque R3 est un groupement méthyle.

Selon un mode de réalisation non couvert par l'invention x est un nombre entier compris entre 0 et 50, y est un nombre entier compris entre 1 et 500.

Par une gamme « entre 0 et 50 », on entend les valeurs suivantes ou tout intervalle compris entre ces valeurs : 1 ; 2 ; 3 ; 4 ; 5 ; 6 ; 7 ; 8 ; 9 ; 10 ; 11 ; 12 ; 13 ; 14 ; 15 ; 16; 17 ; 18 ; 19; 20 ; 21 ; 22 ; 23 ; 24 ; 25 ; 26 ; 27 ; 28 ; 29 ; 30 ; 31 ; 32 ; 33 ; 34; 35 ; 36 ; 37 ; 38 ; 39 ; 40 ; 45 ; 50. De même, par une gamme « entre 1 et 500 », on entend les valeurs suivantes ou tout intervalle compris entre ces valeurs : 1 ; 2 ; 3 ; 4 ; 5 ; 6 ; 7 ; 8 ; 9 ; 10 ; 11 ; 12 ; 13 ; 14 ; 15 ; 16 ; 17 ; 18 ; 19 ; 20 ; 21 ; 22 ; 23 ; 24 ; 25 ; 26 ; 27 ; 28 ; 29 ; 30 ; 31 ; 32 ; 33; 34; 35; 36; 37; 38; 39; 40; 45 ; 50; 55; 60; 65; 70; 75; 80; 85; 90; 95 ; 105 ; 110 ; 115 ; 120 ; 125 ; 130 ; 135 ; 140 ; 145 ; 150 ; 155 ; 160 ; 165 ; 170 ; 175 ; 180 ; 185 ; 190 ; 195 ; 200 ; 205 ; 210 ; 215 ; 220 ; 225 ; 230 ; 235 ; 240 ; 245 ; 250 ; 260 ; 270 ; 280 ; 290 ; 300 ; 310 ; 320 ; 330 ; 340 ; 350 ; 360 ; 370 ; 380 ; 390 ; 400 ; 410 ; 420 ; 430 ; 440 ; 450 ; 460 ; 470 ; 480 ; 490 ; 500.

En général, y est compris entre 1 et 150, en particulier entre 1 et 140. Typiquement, y est compris entre 1 et 80. De préférence, la somme x+y est comprise entre 1 et 500.

Le rapport y/x est strictement supérieur à 0,5. Une gamme « strictement supérieur à 0,5 » comprend les valeurs suivantes ou tout intervalle entre ces valeurs : 0,5 ; 0,6 ; 0,7 ; 0,8 ; 0,9 ; 1,0 ; 1,1 ; 1,2 ; 1,3 ; 1,4 ; 1,5 ; 1,6 ; 1,7 ; 2, 2,5; 3 ; 3,5 ; 4,0 ; 4,5 ; 5,0 ; 5,5 ; 6,0 ; 6,5 ; 10 ; 15 ; 20 ; 25 ; 30 ; 35 ; 40 ; 45 ; 50 ; 55 ; 60 ; 65 ; 70 ; 75 ; 80 ; 95 ; 100 ; 110 ; 120 ; 130 ; 140 ; 150 ; 160 ; 170 ; 180 ; 190 ; 200 ; 210 ; 220 ; 230 ; 240 ; 250 ;etc.

La masse molaire du polyalcoxysiloxane de formule (I) est typiquement comprise entre 300 g/mol et 200 000 g/mol, de préférence comprise entre 300 g/mol et 30 000 g/mol. La masse molaire peut notamment être mesurée par chromatographie par perméation de gel (GPC).

Selon l'invention, x vaut 0. Cela signifie que le polyalcoxysiloxane ne comprend que des motifs alcoxylés (ou phénoxylés). Dans un mode de réalisation préféré, x est nul et y est compris entre 1 et 140, en particulier x est nul et y est compris entre 1 et 80.

Selon l'invention, l'huile polyalcoxysiloxane peut comprendre un mélange de dérivés de formule (I) de différentes longueurs, c'est-à-dire pour lesquels les valeurs de y ne sont pas toutes les mêmes. Dans ce cas, il est possible pour une huile polyalcoxysiloxane selon l'invention de définir une valeur moyenne de y. De préférence, la valeur moyenne de y dans une huile polyalcoxysiloxane selon l'invention est comprise entre 50 et 60.

Selon l'invention, l'huile polyalcoxysiloxane peut comprendre un mélange d'huiles de base polyalcoxysiloxane de formule (I) présentant des substitutions différentes parmi R1, R2 ou encore R3. Selon une caractéristique de l'invention, le mélange d'huiles de base polyalcoxysiloxane de formule (I) peut correspondre à et/ou est obtenu à partir d'un mélange physique de différentes huiles synthétisées séparément au préalable.

Selon une autre caractéristique de l'invention, le mélange d'huiles de base polyalcoxysiloxane de formule (I) peut être obtenu lors de la même synthèse chimique, par exemple lorsqu'un mélange d'alcools présentant des longueurs de chaîne variées est utilisé. On obtient ainsi, lors de la même synthèse, un mélange d'huiles de base polyalcoxysiloxane de formule (I) dont le groupe R2 varie entre les huiles (on peut ainsi obtenir un mélange d'huiles de base polyalcoxysiloxane de formule (I) pouvant comprendre une première huile polyalcoxysiloxane dont le groupe R2 est un groupement hexadécyle (C16) et une huile polyalcoxysiloxane dont le groupe R2 est un groupement octadécényle (C18)).

Par « agent lubrifiant » on entend un agent qui, lorsqu'il est utilisé seul ou dans une composition, permet de diminuer la friction entre deux surfaces en mouvement l'une par rapport à l'autre.

La Demanderesse a découvert de manière inattendue que les huiles de base polyalcoxysiloxanes de formule (I) selon l'invention possèdent des coefficients de friction (CoF) inférieurs à ceux des polysiloxanes, tels que le PDMS et des polyalphaoléfines (PAO) voire à ceux d'autres fluides à base d'organophosphates employés dans le domaine de l'hydraulique, et ce dans des conditions particulières. Ceci confirme leur supériorité en termes de lubricité par rapport à ceux-ci. Notamment, les CoF mesurés pour les polyalcoxysiloxanes de formule (I) sont inférieurs à 0,1, ce qui indique de bonnes performances. Dans les mêmes conditions, les CoF mesurés pour les polydiméthylsiloxanes, les organophosphates (commercialisé par exemple sous la marque Skydrol^{®}) et les polyalphaoléfines de référence sont supérieurs ou égaux à 0,1. Lesdites conditions particulières sont les suivantes : régime de lubrification mixte, vitesse 100 mm/s, pur glissement, charge de 40 N (pression 1,02 GPa), température 75°C.

Par « coefficient de friction CoF », on entend une caractéristique adimensionnelle intrinsèque à une huile de base et indiquant la capacité d'un film d'huile de base à réduire le frottement entre deux surfaces. La valeur du coefficient de friction, aussi connu sous le terme pouvoir lubrifiant, est très dépendante du régime de lubrification. La mesure du coefficient de friction peut s'effectuer au moyen d'une machine de traction telle qu'une Mini Traction Machine (MTM) équipée de bille et de disque en acier AISI 52100. En particulier, les essais peuvent être réalisés à une vitesse de 100 mm/s, en pur glissement (Sliding Rolling Ratio de 200%), sous une charge de 40 N équivalente à une pression de contact de 1,02 GPa et à une température de 75°C, pendant une heure.

Le frottement est une force qui s'oppose au mouvement relatif de deux surfaces en contact. Il dépend de plusieurs facteurs tels que l'état de la surface, la température, la puissance normale, la vitesse de glissement, etc. Un important frottement entre deux surfaces (qui se caractérise par un fort coefficient de friction) conduira à l'usure des corps en mouvement. Le meilleur moyen de réduire ce risque est d'ajouter un lubrifiant entre les surfaces, de manière à ce que celles-ci ne soient pas, dans un régime de lubrification hydro-dynamique, en contact direct. Le coefficient de friction est fonction des caractéristiques du système et son évolution est graphiquement illustrée par la courbe de Stribeck.

Le choix du régime hydro-dynamique permet de caractériser le pouvoir lubrifiant d'une huile de base, dans des conditions de pression, de température et de vitesse relativement standards pour des systèmes de lubrification peu exigeants tels que des pompes et autres accessoires présents dans des circuits hydrauliques.

Les huiles de base polyalcoxysiloxanes de formule (I) possèdent des indices de viscosité élevés, notamment des indices de viscosité supérieurs à 200, de préférence supérieurs à 300, se rapprochant de ceux enregistrés pour les PDMS (>350) et nettement supérieurs à ceux des polyalphaoléfines notamment. Ceci signifie que les huiles de base polyalcoxysiloxanes selon l'invention possèdent une grande fluidité sur une large amplitude thermique, notamment à basse température. Par basse température, on désigne de préférence une température inférieure à -40°C, en particulier inférieure à -50°C. La mesure de l'indice de viscosité peut être réalisée par toute technique connue dans l'art. Elle est préférentiellement réalisée selon la méthode standardisée connue sous l'appellation ASTMD2270.

Les huiles de base polyalcoxysiloxanes de formule (I) peuvent être utilisées soit seules, soit sous la forme d'un mélange d'au moins deux huiles de base polyalcoxysiloxanes de formule (I), soit en mélange avec au moins une « autre huile de base », en tant que co-base ou base majoritaire, de préférence en tant que co-base. De préférence, l'huile de base polyalcoxysiloxane de formule (I) est utilisée en absence d'une autre huile de base.

Parmi les autres huiles de base susceptibles d'être mélangées avec les huiles de base polyalcoxysiloxane selon l'invention, on peut citer les polyalphaoléfines, les polydiméthylsiloxanes et les esters synthétiques, en particulier les diesters. Ces autres huiles de base sont connues de l'homme du métier et ne seront pas, par conséquent, détaillées ci-après.

En effet, les huiles de base polyalcoxysiloxanes selon l'invention sont, contrairement aux polydiméthylsiloxanes, compatibles avec ces différentes autres huiles de base, en particulier à haute température, mais également pour certaines autres huiles de base à basse température, notamment pour les autres huiles de base peu visqueuses. L'huile de base polyalcoxysiloxane selon l'invention et l'autre huile de base peuvent être utilisées dans le mélange en toutes proportions massiques allant de 100 :0 à 0 :100 (bornes exclues), de préférence allant de 10 :90 à 90 :10 (bornes incluses), et englobant ainsi les proportions massiques suivantes (bornes inclus) 10 :90, 50 :50 ou 90 :10.

Les huiles de base polyalcoxysiloxane de formule (I) selon l'invention peuvent également être utilisées en tant que fluide diélectrique. En effet, leurs caractéristiques physicochimiques telles que leurs propriétés isolantes, leur point d'écoulement, leur viscosité cinématique, leur point d'éclair, leur point de feu et/ou leur température d'auto-ignition sont parfaitement adaptées pour que ces huiles de base constituent un bon fluide diélectrique. Aussi, selon la présente invention, l'huile de base polyalcoxysiloxane de formule (I) remplit de préférence simultanément les fonctions de lubrification et de pouvoir diélectrique. Cela est particulièrement adapté lorsque l'huile de base polyalcoxysiloxane de formule (I) selon l'invention est utilisée comme lubrifiant dans un système nécessitant une isolation électrique, un refroidissement, une extinction et/ou limitation des arcs électriques, et/ou une réduction des décharges partielles, tel que par exemple les transformateurs électriques : transformateurs de traction, transformateurs de puissance, transformateurs d'éolienne, transformateurs off-shore, transformateurs de distribution, etc.

En complément, l'huile de base polyalcoxysiloxane de formule (I) selon l'invention est parfaitement adaptée pour la lubrification des systèmes hydrauliques, que ce soit pour des systèmes indépendants de petites dimensions, comme les actuateurs (quelques litres de fluides), ou encore pour des systèmes hydrauliques centralisés de grande taille assurant la transmission de commandes (>100L de fluide). Elle peut également être adaptée aux fluides présents dans les trains d'atterrissage, les fluides radar et autres fluides diélectriques utilisées dans les applications militaires ou spatiales. Grace à son faible coefficient de friction (CoF), l'huile de base polyalcoxysiloxane de formule (I) selon l'invention peut en particulier parfaitement lubrifier les pompes d'un système hydraulique, apportant un niveau de protection contre l'usure à long terme, et, en conséquence, garantir une parfaite longévité des équipements et composants mécaniques.

De par leurs caractéristiques techniques avantageuses telles que précédemment citées, les huiles de base polyalcoxysiloxane de formule (I) selon l'invention peuvent également être utilisées en tant que fluide hydraulique. Le niveau de performance de ces formulations alternatives peut facilement se justifier comme étant équivalent ou supérieur à celui de fluides de références comme, par exemple, les esters de phosphate qui sont largement utilisés dans l'aviation commerciale (cf. exemple 2 ci-après).

Les polyalcoxysiloxanes de formule (I) selon l'invention peuvent être synthétisés par toute technique connue de l'homme du métier. Les polyalcoxysiloxanes de formule (I) peuvent être notamment synthétisés par des procédés tels que ceux décrits dans les demandes de brevet EP0475440 et WO2014099497. Cependant, la Demanderesse a constaté que le remplacement des systèmes catalytiques reportés (catalyseurs Palladium ou Platine avec, éventuellement, ajout complémentaire d'acides carboxyliques) par des bases bien connues de l'homme de l'art (eg Fluorure de Césium CsF) pouvait avantageusement améliorer le taux de conversion et donc le rendement de la réaction de même que sa sélectivité.

A titre d'exemple, le système catalytique peut comprendre au moins un ou plusieurs catalyseurs choisis parmi : CsF, CsOH, Cs(TFA), KOH, Ba(OH)₂, Ca(OH)₂, Sr(OH)₂, Ba(OH)₂, CH₃COOLi, NaOH, des hydroxydes métalliques, des carboxylates métalliques, des bases organiques comme les amines tertiaires ou autres hétérocycles azotés aromatiques ou non basiques (pyridine, morpholine, pipéridine et pipérazine alkylées, etc.). En général, le système catalytique comprend du fluorure de césium CsF ou de l'hydroxyde de césium (CsOH) et est avantageusement de l'hydroxyde de césium (CsOH). Ce dernier composé présente l'avantage d'être moins toxique que le CsOH et est également plus simple d'utilisation.

L'invention concerne également une composition lubrifiante comprenant une huile de base polyalcoxysiloxane de formule (I) telle que définie ci-dessus ou un mélange de celles-ci, et au moins un additif.

Par « additif », on entend en particulier un produit chimique qui est ajouté à la composition lubrifiante pour en améliorer certaines propriétés pour son application en tant qu'agent lubrifiant.

Le au moins un additif compris dans la composition lubrifiante selon l'invention peut être choisi parmi les additifs bien connus par l'homme du métier. Il peut notamment être choisi dans le groupe constitué par les additifs adaptés aux pressions extrêmes, les additifs anti-usure, les additifs détergents, les additifs modifiant la viscosité, les additifs anti-mousse, les additifs antioxydants aminiques et phénoliques, les inhibiteurs de corrosion, les additifs retardateurs de flamme et une combinaison d'au moins deux desdits additifs.

Comme exemples d'additifs adaptés aux pressions extrêmes, on peut citer notamment le dithiophosphate de zinc et le MoS₂ ou bisulfure de molybdène.

Comme exemples d'additifs anti-usure et/ou extrême-pression, on peut citer notamment les sulfures, les chlorures, les organophosphates, aryl et/ou alkyl phosphates et les phosphates métalliques par exemple les dialkyldithiophosphates de zinc (ZDDP).

Comme exemples d'additifs anti-mousse, on peut citer notamment les silicones.

Comme exemples d'additifs retardateurs de flamme, on peut citer les organophosphates à haut point d'auto-inflammation.

Comme exemples d'additifs antioxydants, on peut citer notamment les phénols, les amines aromatiques, et les additifs soufrés comme les dithiophosphates de zinc. Les additifs commercialisés sous les dénominations Vanlube 81^{®} et Naugalube^{®} 438 (4,4'-dioctyldiphénylamine), Irganox^{®} LO6 (N-phényl-1-naphtylamine octylée), sont notamment des exemples d'amines organiques aromatiques. Les additifs commercialisés sous les dénominations Irganox^{®} L109 (hexaméthylène glycol bis(3,5-di-tertbutyl-4-hydroxy-hydrocinnamate)) et Ionol^{®} 220 AH (4,4'-méthylènebis(2,6-di-tertbutylphénol)) sont des exemples d'additifs antioxydants phénoliques.

Comme exemples d'inhibiteurs de corrosion solubles dans l'huile, on peut citer par exemple les agents à base de zinc, sulfonates, esters de sorbitan, phosphates, phosphates d'amines.

Les exemples d'additifs détergents et/ou modifiant la viscosité sont bien connus de l'homme du métier.

Dans un mode de réalisation, la composition lubrifiante selon l'invention comprend au moins deux, au moins trois, au moins quatre, au moins cinq, au moins six, additifs différents.

Dans un mode de réalisation, la composition comprend moins de dix additifs ou dix additifs différents.

Chacun des additifs présents dans la composition lubrifiante selon l'invention est avantageusement présent en une quantité allant de 0,001% à 35% en poids, et de préférence entre 0,1% et 15% en poids, par rapport au poids total de ladite composition lubrifiante.

La composition lubrifiante selon l'invention comprend avantageusement une quantité d'huile de base polyalcoxysiloxane selon l'invention allant de 50% à 99,9999% en poids par rapport au poids total de la composition lubrifiante, de préférence une quantité d'huile de base polyalcoxysiloxane selon l'invention de 60 à 99%, en particulier de 75 à 95%. Les autres composants de ladite composition sont de préférence choisis parmi d'autres huiles de base et des additifs, notamment les additifs tels que décrits ci-avant ou d'autres types d'additifs connus dans l'art.

Les autres huiles de base susceptibles d'être mélangées à une huile de base selon l'invention ou susceptibles d'être comprises dans une composition lubrifiante selon l'invention sont les mêmes que celles citées précédemment et peuvent notamment être des huiles lubrifiantes minérales, ou des huiles lubrifiantes synthétiques comme les esters synthétiques, ou les polyalphaoléfines.

La composition lubrifiante selon l'invention peut être utilisée dans différents domaines, notamment dans l'industrie, dans l'énergie, dans la marine, dans l'automobile et/ou dans l'aéronautique. Ainsi, elle peut notamment être utilisée en tant que fluide hydraulique, en tant qu'huile de moteur, en tant qu'huile adaptée pour le transfert d'énergie et/ou en tant que lubrifiant de turbine. Elle peut être avantageusement utilisée dans tous les domaines où les huiles silicones sont utilisées, tout en présentant généralement des caractéristiques plus avantageuses.

L'invention concerne également un polyalcoxysiloxane de formule (II) apte à et/ou configuré pour former une huile de base de composition lubrifiante. 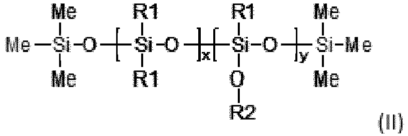 dans laquelle :
chaque R1 est indépendamment un groupement alkyle en C1 à C4,
chaque R2 est indépendamment un groupement alkyle ou alcényle en C4 à C16, de préférence en C4 à C14, en particulier en C4 à C12 ou un phényle,
x vaut 0 et
y est un nombre entier compris entre 1 et 500.

Selon l'invention, par groupement alkyle ou alcényle en C4 à C16, on entend un groupement comprenant de 4 à 16 atomes de carbone ou de tout intervalle compris entre : 4 ; 5 ; 6 ; 7 ; 8 ; 9 ; 10 ; 11 ; 12 ; 13 ; 14 ; 15 ; 16.

Les polyalcoxysiloxanes de formule (II) constituent un sous-groupe particulier des polyalcoxysiloxanes de formule (I) telle que précédemment définie. Ainsi, les caractéristiques précisées ci-dessus s'appliquent également pour la formule générale (II) sauf lorsqu'il en est spécifié autrement ci-après.

Dans un mode de réalisation, chaque R1 dans la formule (II) est indépendamment choisi dans le groupe constitué par un groupement méthyle, un groupement éthyle De préférence, tous les R1 sont des groupements méthyles, tous les R1 sont des groupements éthyles En particulier, tous les R1 sont des groupements méthyles.

Dans un mode de réalisation, chaque R2 dans la formule (II) est indépendamment un groupement alkyle ou alcényle, de préférence alkyle, en C4 à C14, de préférence en C4 à C12.

Dans un mode de réalisation, chaque R2 dans la formule (II) est indépendamment un groupement alkyle en C4 à C14, de préférence en C4 à C12.

Les chaînes R2 peuvent être toutes identiques dans le même composé de formule (II), mais elles peuvent également être différentes deux à deux.

Ainsi, selon un mode de réalisation, dans le même composé de formule (II), toutes les chaînes R2 sont identiques.

Selon un autre mode de réalisation, dans le même composé de formule (II), les chaînes R2 sont différentes dans les motifs répétés y. Selon ce mode, chaque R2 est indépendamment un groupement alkyle ou alcényle en C2 à C16, de préférence en C2 à C14, typiquement en C2 à C12, tel qu'en C7, et un groupe phényl. Généralement, le groupe phényl représente, en nombre, 70% ou moins, de préférence 60% ou moins, en particulier 50% ou moins du motif répété y fois. A titre d'exemple, R2 est indépendamment un groupement alkyle en C2 à C16, de préférence en C2 à C14, typiquement en C2 à C12, tel qu'en C7, et un groupe phényl, ce dernier représentant en nombre, 50% ou moins du motif répété y fois.

Dans la formule (II), selon un mode de réalisation non couvert par l'invention, x est un nombre entier compris entre 0 et 50, y est un nombre entier compris entre 1 et 500. De préférence, x est compris entre 0 et 25. De préférence, y est compris entre 1 et 150, de préférence entre 1 et 140. En particulier, y est compris entre 1 et 80. De préférence, la somme x+y est comprise entre 1 et 500.

Par une gamme « entre 0 et 50 », on entend les valeurs suivantes ou tout intervalle compris entre ces valeurs : 1 ; 2 ; 3 ; 4 ; 5 ; 6 ; 7 ; 8 ; 9 ; 10 ; 11 ; 12 ; 13 ; 14 ; 15 ; 16; 17 ; 18 ; 19; 20 ; 21 ; 22 ; 23 ; 24 ; 25 ; 26 ; 27 ; 28 ; 29 ; 30 ; 31 ; 32 ; 33 ; 34; 35 ; 36 ; 37 ; 38 ; 39 ; 40 ; 45 ; 50. De même, par une gamme « entre 1 et 500 », on entend les valeurs suivantes ou tout intervalle compris entre ces valeurs : 1 ; 2 ; 3 ; 4 ; 5 ; 6 ; 7 ; 8 ; 9 ; 10 ; 11 ; 12 ; 13 ; 14 ; 15 ; 16 ; 17 ; 18 ; 19 ; 20 ; 21 ; 22 ; 23 ; 24 ; 25 ; 26 ; 27 ; 28 ; 29 ; 30 ; 31 ; 32 ; 33; 34; 35; 36; 37; 38; 39; 40; 45 ; 50; 55; 60; 65; 70; 75; 80; 85; 90; 95 ; 105; 110; 115; 120; 125; 130; 135; 140; 145; 150; 155; 160; 165; 170; 175; 180; 185; 190 ; 195 ; 200 ; 205 ; 210 ; 215 ; 220 ; 225 ; 230 ; 235 ; 240 ; 245 ; 250 ; 260 ; 270 ; 280 ; 290 ; 300 ; 310 ; 320 ; 330 ; 340 ; 350 ; 360 ; 370 ; 380 ; 390 ; 400 ; 410 ; 420 ; 430 ; 440 ; 450 ; 460 ; 470 ; 480 ; 490 ; 500.

Le rapport y/x est strictement supérieur à 0,5. Une gamme « strictement supérieur à 0,5 » comprend les valeurs suivantes ou tout intervalle entre ces valeurs : 0,5 ; 0,6 ; 0,7 ; 0,8 ; 0,9 ; 1,0 ; 1,1 ; 1,2 ; 1,3 ; 1,4 ; 1,5 ; 1,6 ; 1,7 ; 2, 2,5; 3 ; 3,5 ; 4,0 ; 4,5 ; 5,0 ; 5,5 ; 6,0 ; 6,5 ; 10 ; 15 ; 20 ; 25 ; 30 ; 35 ; 40 ; 45 ; 50 ; 55 ; 60 ; 65 ; 70 ; 75 ; 80 ; 95 ; 100; 110; 120; 130; 140; 150; 160; 170; 180; 190 ; 200 ; 210 ; 220 ; 230 ; 240 ; 250 ;etc.

La masse molaire du polyalcoxysiloxane de formule (II) est typiquement comprise entre 300 g/mol et 200 000 g/mol, de préférence comprise entre 300 g/mol et 30 000 g/mol.

Selon l'invention, x vaut 0 dans la formule (II). Cela signifie que le polyalcoxysiloxane ne comprend que des motifs alcoxylés (ou phénoxylés). Dans un mode de réalisation préféré, x est nul et y est compris entre 1 et 140 dans la formule (II), en particulier x est nul et y est compris entre 1 et 80.

L'invention concerne enfin des polyalcoxysiloxanes particuliers, choisis dans le groupe constitué des polyalcoxysiloxanes de formule (II) dans lesquels :
x=0, y est compris entre 1 et 140, chaque R1 est un méthyle, et chaque R2 est une chaîne n-butyle (PAS4),
x=0, y est compris entre 1 et 140, chaque R1 est un méthyle, et chaque R2 est une chaîne heptyle (PAS7),
x=0, y est compris entre 1 et 140, chaque R1 est un méthyle, et chaque R2 est une chaîne dodécyle (PAS12),
x=0, y est compris entre 1 et 140, chaque R1 est un méthyle, et chaque R2 est une chaîne tétradécyle (PAS14), et
x=0, y est compris entre 1 et 140, chaque R1 est un méthyle, et chaque R2 est choisi dans le groupe constitué des chaînes octadécènyle et hexadécyle (PAS16-18).

Dans un mode de réalisation, indépendamment pour chacun des polyalcoxysilanes particuliers selon l'invention, y est compris entre 1 et 80. Dans un autre mode de réalisation, indépendamment pour chacun des polyalcoxysiloxanes selon l'invention, une valeur moyenne de y est comprise entre 50 et 60.

L'invention peut également porter sur une composition lubrifiante comprenant en tant qu'agent lubrifiante l'huile de base polyalcoxysiloxane de formule (I) ou (II) (à savoir pouvant comprendre un ou plusieurs polyalcoxysiloxane de formule (I) ou (II)), ainsi qu'au moins un additif, avec éventuellement au moins une autre huile de base (différente des polyalcoxysiloxane de formule (I) ou (II) selon l'invention), en tant que co-base ; ces composés étant tels que définis ci-dessus.

### EXEMPLES

Les exemples suivants sont destinés à illustrer l'invention sans en limiter la portée.

### Exemple 1 : Synthèse de polyalcoxysiloxanes selon l'invention (le catalyseur est le fluorure de Césium CsF)

La synthèse des polyalcoxysiloxanes selon l'invention est réalisée en suivant le protocole suivant :

### - Conditions

La synthèse des composés polyalcoxysiloxanes selon l'invention s'effectue impérativement dans des conditions anhydres imposant le lavage et le séchage de tous les éléments du montage sous balayage d'azote ;

### - Dispositif

Afin de réaliser la synthèse des polyalcoxysiloxanes selon l'invention, il a été utilisé un réacteur de 6L col à bride rainuré de type « Schott » cylindrique commercialisé par la société Belleville SA, ce dernier étant surmonté d'un couvercle tétracol.

Le réacteur est équipé d'un condensateur à eau afin de permettre de condenser les vapeurs d'alcool au cours de la réaction et est maintenu sous flux d'azote, ainsi que d'un système d'agitation mécanique.

### - Synthèse

a) un alcool (tel que défini dans le tableau 1 ci-dessous) est introduit en excès (environ 10% en masse par rapport à la quantité stœchiométrique correspondant au nombre de moles de Si-H contenue dans un PolyMéthylHydroSiloxane qui sera utilisé ci-après) dans le réacteur et maintenu sous un flux azote jusqu'à une température de 75-80°C ;
b) lorsque le milieu réactionnel est anhydre, le catalyseur (fluorure de Césium CsF) est introduit (idéalement 0.005% en masse par rapport à la masse totale du milieu réactionnel) ;
c) le PolyMéthylHydroSiloxane (PMHS), intitulé Silres^{®} BS 94 (commercialisé par Wacker), est ensuite ajouté par goutte à goutte en contrôlant le débit pour éviter un emballement de la réaction ;
d) l'avancement précis de la réaction peut être déterminé par infrarouge en vérifiant la diminution, puis la disparition de la bande caractéristique « Si-H » (≈2170cm⁻¹) ;
e) une fois la réaction terminée, le catalyseur est extrait du milieu réactionnel par filtration et les excès d'alcool sont ensuite distillés sous vide.

Les polyalcoxysiloxanes selon l'invention qui ont été synthétisés en suivant le protocole ci-dessus sont présentés dans le tableau 1 ci-dessous.

**[Tableau 1]**

| **PAS** | **Alcool introduit dans la synthèse** | **R1** | **R2** | **R3** | **x** | **Fraction polymérique y** |
|---|---|---|---|---|---|---|
| **PAS4** | *n*-butanol | méthyle | *n*-butyle | méthyle | 0 | 1 à 140 |
| **PAS5** | *n*-pentanol | méthyle | *n*-pentyle | méthyle | 0 | 1 à 140 |
| **PAS6** | *n*-hexanol | méthyle | *n*-hexyle | méthyle | 0 | 1 à 140 |
| **PAS7** | *n*-heptanol | méthyle | *n*-heptyle | méthyle | 0 | 1 à 140 |
| **PAS8** | *n*-octanol | méthyle | *n*-octyle | méthyle | 0 | 1 à 140 |
| **PAS9** | *n*-nonanol | méthyle | *n*-nonyle | méthyle | 0 | 1 à 140 |
| **PAS10** | *n*-decanol | méthyle | *n*-décyle | méthyle | 0 | 1 à 140 |
| **PAS12** | alcool laurique | méthyle | *n*-dodécyle | méthyle | 0 | 1 à 140 |
| **PAS16-18** | Mélange alcools cetylique et oléique (NAFOL 1618) | méthyle | *n*-hexadécyle | méthyle | 0 | 1 à 140 |
| | | | *n*-octadécènyle | | | |

La valeur moyenne de y pour chacune des huiles polyalcoxysiloxanes du tableau 1 est comprise entre 50 et 60.

### Exemple 2 : Synthèse de polyalcoxysiloxanes selon l'invention (le catalyseur est l'hydroxyde de Césium CsOH)

La synthèse de polyalcoxysiloxanes selon l'exemple 2 est illustrée ci-dessous :

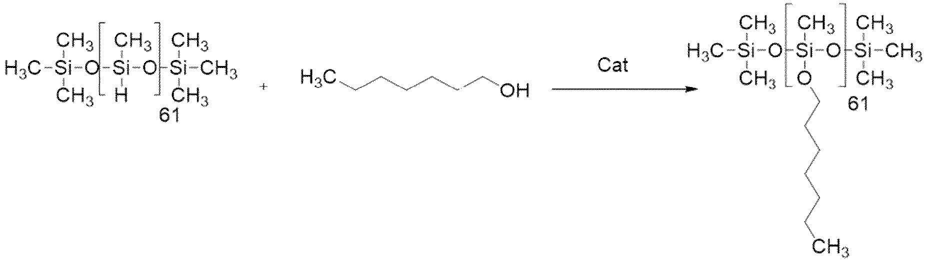

La synthèse des polyalcoxysiloxanes selon l'invention est réalisée en suivant le protocole suivant :

### - Les conditions et le dispositif utilisés sont identiques à ceux de l'exemple 1 décrits ci-dessus ;

### - Synthèse

a) 972 g d'heptanol est introduit en excès dans le réacteur et maintenu sous un flux azote jusqu'à une température de 20°C pendant 10 minutes ;
b) 0,939 g de catalyseur (l'hydroxyde de Césium CsOHn .H₂O₂) est introduit (idéalement 0.07% en masse par rapport à la masse totale du milieu réactionnel) ;
c) 400 g de PolyMéthylHydroSiloxane (PMHS), intitulé Silres^{®} BS 94 (commercialisé par Wacker), est ensuite ajouté par goutte à goutte à l'aide d'une ampoule de coulée en contrôlant le débit (de l'ordre de 1,7 mL/mm) pour éviter un emballement de la réaction ;
d) la réaction est exothermique, la température du milieu réactionnel est montée progressivement jusqu'à 65°C avant de se stabiliser ;
e) l'avancement précis de la réaction peut être déterminé par infrarouge en vérifiant la diminution, puis la disparition de la bande caractéristique « Si-H » (≈2170cm⁻¹) ;
f) Après l'ajout total du PolyMéthylHydroSiloxane (PMHS), le milieu réactionnel est laissé revenir progressivement à température ambiante (environ 3 h de temps) ;
g) une fois la réaction terminée, le catalyseur est extrait du milieu réactionnel par filtration sur un lit de dicalite et de silice et les excès d'alcool sont ensuite distillés sous pression réduite (2 mbar, 100°C pendant 2 heures) ;
h) le résidu de distillation est filtré sur papier filtre avant conditionnement.

Les polyalcoxysiloxanes synthétisés selon cet exemple sont les suivants :

**[Tableau 2]**

| **PAS** | **Alcool introduit dans la synthèse** | **R1** | **R2** | **R3** | **x** | **Fraction polymérique y** |
|---|---|---|---|---|---|---|
| **PAS7** | *n*-heptanol | méthyle | *n*-heptyle | méthyle | 0 | 1 à 140 |

La valeur moyenne de y pour chacune des huiles polyalcoxysiloxanes du tableau 1 est de l'ordre de 61.

### Exemple 3 : Caractérisation des polyalcoxysiloxanes des exemples 1 et 2

### Caractéristiques testées

### * Le Coefficient de friction

Le coefficient de friction (CoF) a été mesuré pour chaque polyalcoxylsiloxane synthétisé à l'exemple 1, dans les conditions suivantes : régime de lubrification mixte, vitesse 100 mm/s, pur glissement, charge de 40 N (pression 1,02 GPa), température 75°C.

En particulier, le coefficient de friction est mesuré au moyen d'une Mini Traction Machine (MTM) équipée de bille et de disque en acier AISI 52100, à une vitesse de 100 mm/s, en pur glissement (Sliding Rolling Ratio de 200%), sous une charge de 40 N équivalente à une pression de contact de 1,02 GPa et à une température de 75°C, pendant une heure.

### * La viscosité cinématique

La viscosité cinématique à différentes températures (100°C, 40°C, -40°C) a été mesurée selon la norme ASTM D445/2532 respectivement à 35 minutes, 3 heures, 72 heures et après 72 heures.

### * L'indice de viscosité

L'indice de viscosité a été mesurée selon la norme méthode ASTM D2270.

### * Point d'éclair

Le point d'éclair a été mesuré selon la norme ASTM D92

### * Point de feu

Le point de feu a été mesuré selon la norme ASTM D92.

Le point d'auto-inflammation a été mesuré selon la norme ASTM E659.

### * Le point d'écoulement*

Le point d'écoulement a été mesurée selon la norme ASTM D97.

### * Stabilité au cisaillement mécanique KRL après 100h

La stabilité au cisaillement mécanique KRL après 100h a été mesure selon la méthode CEC L 45-A-99 modifiée.

### Résultats

La figure 1 présente les résultats de mesure de coefficient de friction des polyalcoxysiloxanes selon l'exemple 1, ainsi que les résultats de mesure pour les huiles de référence PDMS 20 et PAO 8 et pour trois fluides hydrauliques de référence (FH2 (mélange PAO/ester), FH42 (mélange PAO/ester), Skydrol^{®} type V (fluide hydraulique aéronautique à base d'organophosphates)) respectivement homologués selon les référentiels militaires MIL-PRF-83282, MIL-PRF-87257 et civil BMS 3-11 Type V. PAO8 désigne une polyalphaoléfine de viscosité cinématique de 8 cSt à 100°C.

Dans ces conditions, les valeurs de coefficients de friction des polyalcoxysiloxanes selon l'invention (exemple 1) sont inférieures à 0,1 et sont, donc, nettement plus favorables en lubricité que le fluide hydraulique aéronautique faisant référence dans l'aviation commerciale à savoir le Skydrol V (BMS 3-11 type V). Parmi les meilleurs polyalcoxysiloxanes de la série préparée, certains atteignent des coefficients de friction (CoF) proches voire même inférieurs à 0,05 présentant un gain très substantiel au regard des fluides militaires de référence MIL-PRF-83282 & MIL-PRF-87257. Cet essai démontre que les composés polyalcoxysiloxanes de l'invention permettent d'envisager une meilleure protection des systèmes hydrauliques (usures moindres et moins rapides des pièces mécaniques en mouvement et en contact les unes par rapport aux autres).

Les tableaux 3 et 3bis ci-dessous rassemblent les résultats des mesures des propriétés physico-chimiques pour les polyalcoxysiloxanes synthétisés à les exemples 1 et 2, et les valeurs correspondantes pour des lubrifiants de référence : PDMS20 et PAO8.

**[Tableau 3]**

| **Caractéristiques** | **Huiles de référence** | | **Huiles de base selon l'invention** | | | |
|---|---|---|---|---|---|---|
| | **PDMS20** | **PAO8** | **PAS4 Ex.1** | **PAS5 Ex.1** | **PAS6 Ex.1** | **PAS7 Ex.1** |
| Coefficient de Friction (CoF) | >0,25 | 0,100 | 0,049 | 0,061 | 0,087 | 0,056 |
| Viscosité cinématique à (cSt): | | | | | | |
| 100°C | 6,30 | 8 | 6,48 | 5,57 | 5,59 | 6,24 |
| 40°C | 14,70 | 48 | 20,24 | 15,89 | 17,24 | 18,9 |
| -40°C | | 19000 | 460 | 256 | 421 | 730 |
| Indice de viscosité | 467 | 139 | 324 | 345 | 312 | 325 |
| Point d'éclair COC (°C) | 248 | 260 | 152 | 160 | 194 | 220 |
| Point d'écoulement (°C) | <-72 | -48 | <-72 | -93 | -93 | <-72 |

| | **Huiles de base selon l'invention** | | | | | |
|---|---|---|---|---|---|---|
| | **PAS8 Ex.1** | **PAS9 Ex.1** | **PAS10 Ex.1** | **PAS12 Ex.1** | **PAS16-18 Ex.1** | **PAS7 Ex.2** |
| Coefficient de Friction (CoF) | 0,068 | | 0,096 | 0,091 | 0,041 | |
| Viscosité cinématique à (cSt): | | | | | | |
| 100°C | 7,11 | 7,49 | 7,76 | 9,31 | 14,0 | 5,25 |
| 40°C | 25,77 | 28,12 | 28,91 | 37,8 | 69,4 | 16 |
| -40°C | 1390 | | figé | figé | | 643 |
| Indice de viscosité | 262 | 254 | 259 | 242 | 211 | 309 |
| Point d'éclair COC (°C) | 216 | | 266 | | 248 | 214 |
| Point d'écoulement (°C) | | -60 | -39 | -6 | 9 | -96 |
| Point de feu (ASTM D 92) | | | | | | 234 |
| Teneur en eau (ASTM D 1533) en mg/kg | | | | | | 183 |

Les cases grisées dans le tableau 3 correspondent à des mesures qui n'ont pas été effectuées ou qui n'ont pas pu être effectuées au vu du comportement de l'huile dans les conditions de mesure.

Les valeurs de coefficient de friction (CoF) démontrent la supériorité en termes de pouvoir lubrifiant des polyalcoxylsiloxanes selon l'invention par rapport aux huiles polydiméthylsiloxanes et aux polyalphaoléfines.

Les valeurs de viscosité cinématique et d'indice de viscosité démontrent que les huiles polyalcoxysiloxanes selon l'invention possèdent une fluidité très intéressante relativement proche de celles des huiles polydiméthylsiloxanes sur une large amplitude thermique.

Les valeurs de point d'écoulement, notamment celles inférieures à -45°C, de viscosité cinématique, notamment celles inférieures à 28 cSt à 40°C et/ou celles inférieures à 15000 cSt à -40°C, et de point d'éclair démontrent que les huiles polyalcoxysiloxanes selon l'invention peuvent avantageusement combiner à leurs propriétés lubrifiantes des propriétés de fluide diélectrique pour un usage à très basse température compatible avec les régions très froides (Russie, Canada, etc.).

**[Tableau 4]**

| **Caractéristique** | **Unité** | **Huile de base PAS7** | **Phosphate ester (produit Skydrol^{®}** type V) |
|---|---|---|---|
| **Point d'éclair** | °C | 220 | 166 |
| **Point de feu** | °C | 246 | 192 |
| **Stabilité au cisaillement mécanique KRL après 100h** | | | |
| (CEC-L-45-A-99) | | | |
| * Variation de la viscosité cinématique à 40°C | % | 3,0 | -26,4 |
| * Variation de la viscosité cinématique à 100°C | % | -0,9 | -32,7 |
| * Variation de l'indice de viscosité | -- | -17 | -136 |

Ces résultats du tableau 4 montrent que l'huile de base selon l'invention possède des caractéristiques de sécurité et de stabilité au cisaillement (simulant les contraintes mécaniques sévères exercées sur le fluide notamment au niveau des pompes fonctionnant dans un environnement pressurisé) supérieures à celle du fluide hydraulique de référence de l'aviation commerciale (ex : Skydrol^{®}), ce qui en fait un candidat de choix pour une éventuelle substitution. Il est à noter que les composés de l'invention se comportent à un très haut niveau de performance sous l'effet du cisaillement en comparaison du produit Skydrol^{®} type V (fluide de référence sur le marché aéronautique) pour lequel la rhéologie diminue de façon très conséquente après 100h seulement de cisaillement (la chute de l'indice de viscosité indiquant ici un comportement à haute et basse températures drastiquement différente).

### Exemple 4 : Etude de la compatibilité avec d'autres huiles de base

Des mélanges d'une huile de base selon l'invention (exemple 1) avec différentes autres huiles de base ont été réalisés, et leur compatibilité a été étudiée pour différentes proportions huile de base selon l'invention : autre huile de base (0 :100, 10 :90, 50 :50, 90 :10 et 100 :0), et à différentes températures (100°C, température ambiante, 5,9°C et -30°C). L'huile de base selon l'invention est une huile de formule (I) avec R1=méthyle, R2=heptyle, R3=méthyle, x=0 et y=1 à 140.

Une absence de trouble ou de séparation démontrant une très bonne compatibilité de l'huile de base selon l'invention avec l'autre huile de base a pu être observée pour des mélanges en toutes proportions et à toute température avec les polyalphaoléfines de viscosité cinématique à 100°C de 4, 6 et 8 cSt respectivement, désignées PAO4, PAO6 et PAO8.

De même, une très bonne compatibilité de l'huile de base selon l'invention a été démontrée à haute température (100°C) en toutes proportions avec la polyalphaoléfine PAO100 de viscosité cinématique à 100°C de 100 cSt.

Enfin, une très bonne compatibilité de l'huile de base selon l'invention a été démontrée à 100°C, température ambiante et 5,9°C en toutes proportions avec les huiles minérales paraffiniques connues sous les appellations 150 Neutral Solvent^{®}, 600 Neutral Solvent^{®} et BSS^{®} (Bright Stock Solvent).

### Exemple 5 : Etude de la compatibilité avec des additifs anti-usure

Dans cet exemple, il a été mesuré la compatibilité de l'huile de base polyalcoxysiloxane selon l'invention (ici, le composé **PAS7** décrit dans l'exemple 1) avec les additifs anti-usure suivants :
a) le tri(méthyl silyl) phosphate,
b) le tris(triméthylsiloxy)bore
c) (diéthylphosphatoéthyl)triéthoxysilane.
en mesurant notamment la performance mécanique selon la norme ASTM D4172 (usure 4-billes, 1h, 40kg, 75°C 1200 tours par minute).

Les résultats sont présentés dans le tableau 5 ci-dessous :

**[Tableau 5]**

| | **1** | **2** | **3** | **4** | **5** | **6** | **7** |
|---|---|---|---|---|---|---|---|
| **Composition** | PAS7 (huile seule) | PAS7 + a) 1% | PAS7 + a) 3% | PAS7 + b) 1% | PAS7 + b) 3% | PAS7 + c) 1% | PAS7 + c) 3% |
| **Performance mécanique (diamètre d'usure)** | 1,54 | 1,06 | 0,85 | 1,3 | 1,26 | 1,12 | 0,93 |

Cet exemple montre que l'ajout d'additifs anti-usure à l'huile de base polyalcoxysiloxane selon l'invention permet de former une composition lubrifiante ayant une performance mécanique significativement améliorée.

### Exemple 6 : Etude de la compatibilité avec des additifs retardateur de flamme

Dans cet exemple, il a été mesuré la compatibilité de l'huile de base polyalcoxysiloxane selon l'invention (ici, le composé PAS7 décrit dans l'exemple 1) avec des additifs retardateurs de flamme tel que listés ci-dessous, ainsi que leurs effets sur la température d'auto-inflammation des mélanges obtenus.

Les résultats sont présentés dans le tableau 6 ci-dessous :

**[Tableau 6]**

| **Huile de base** | **Retardateurde flamme** | **Teneur massique en additive retardateur de flame** | **Température d'auto-inflammation (°C)** |
|---|---|---|---|
| **Organophosphates (HYJET V)** | N.A. | N.A. | 391 |
| **Organophosphates (SKYDROL^{®} PE 5)** | N.A. | N.A. | 396 |
| **PAS7** | aucun | 0% | 385 |
| **PAS7** | Isodécyl diphényl phosphate | 5% | 393 |
| **PAS7** | isodécyl diphényl phosphate | 10% | 403 |
| **PAS7** | isodécyl diphényl phosphate | 15% | 407 |
| **PAS7** | Phénol, isobutyléné, phosphate (3:1) | 5% | 390 |
| **PAS7** | Phénol, isobutyléné, phosphate (3:1) | 15% | 409 |

Cet exemple montre que l'ajout d'additifs retardateurs de flamme est possible chimiquement et permet à l'huile de base polyalcoxysiloxane selon l'invention de former une composition lubrifiante possédant un point d'auto-inflammation supérieure à ceux de l'huile de base (PAS7) ainsi qu'à ceux des fluides hydrauliques de référence tels que Skydrol^{®} type V et Hyjet V. Il s'agit indéniablement d'un élément de sécurité (au feu) très avantageux.

### Exemple 7 : Autre synthèse de polyalcoxysiloxanes selon l'invention (à partir de deux alcools)

Pour cette étude comparative, les conditions expérimentales sont identiques à celles décrites pour l'exemple 1 ci-dessus, i.e. : le PolyMéthylHydroSiloxane (PMHS) est le Silres^{®}BS94 et le catalyseur est le fluorure de cesium CsF hormis que l'alcool de départ a été remplacé par un mélange de n-heptanol et de phénol en faisant varier leurs ratios molaires : 50% de phénol/50% de n-heptanol et 25% de phénol/75% de n-heptanol. A titre informatif, les caractéristiques des polyalcoxysiloxanes obtenus ont été comparées à celles du composé PAS7 synthétisé selon l'exemple 1 selon l'invention.

Les polyalcoxysiloxanes qui ont été synthétisés en suivant le protocole ci-dessus sont présentés dans le tableau 7 ci-dessous.

**[Tableau 7]**

| **PAS** | **Alcool introduit dans la synthèse** | **R1** | **R2** | **R3** | **x** | **Fraction polymérique y** |
|---|---|---|---|---|---|---|
| **PAS7 (exemple 1)** | *n*-heptanol | méthyle | *n*-heptyle | méthyle | 0 | 1 à 140 |
| **PAS7(a) (exemple 7)** | 75% de n-heptanol/ 25% de phénol/ | méthyle | *n*-heptyle ou phényl | méthyle | 0 | 1 à 140 |
| **PAS7(b) (exemple 7)** | 50% de n-heptanol/ 50% de phénol/ | méthyle | *n*-heptyle ou phényl | méthyle | 0 | 1 à 140 |

La valeur moyenne de y pour chacune des huiles polyalcoxysiloxanes du tableau 1 est comprise entre 50 et 60.

La caractérisation des polyalcoxysiloxanes obtenus est illustrée dans le tableau 8 ci-dessous. Les caractéristiques testées sont celles définies à l'exemple 3.

**[Tableau 8]**

| **Caractéristiques** | **PAS7** | **PAS7(a)** | **PAS7(b)** |
|---|---|---|---|
| Coefficient de Friction (CoF) | 0,056 | 0,116 | 0,087 |

| Viscosité cinématique à (cSt): | | | |
|---|---|---|---|
| 100°C | 6,24 | 6,89 | 6,01 |
| 40°C | 18,9 | 23,1 | 21,0 |
| -40°C | 730 | 1495 | 2662 |
| Indice de viscosité | 325 | 291 | 263 |
| Teneur en eau (ppm) (ASTM D 1533) | 64 | 6 | 13 |
| Point d'écoulement (°C) | <-72 | -84 | -75 |

Cet essai montre d'une part que les polyalcoxylsiloxanes selon l'invention PAS7(a) et PAS7(b) dans lesquels le groupe R2 varie au sein d'un même composé et peut être ici soit un groupe phényl, soit un groupe heptyle, présentent un coefficient de friction très faible (largement inférieur à 0,5), équivalent au polyalcoxysiloxane PAS7 de l'exemple 1. Ces composés PAS7(a) et PAS7(b) comprenant un groupe R2 phényl présentent donc également un excellent pouvoir lubrifiant.

Bien entendu, diverses autres modifications peuvent être apportées à l'invention dans le cadre des revendications annexées.

## Revendications

1. Utilisation d'une huile de base polyalcoxysiloxane de formule (I) 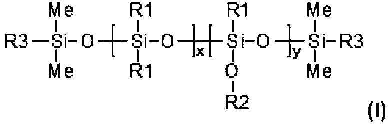 dans laquelle
chaque **R1** est indépendamment un groupement alkyle en C1 à C4,
chaque **R2** est indépendamment un groupement alkyle ou alcényle en C2 à C22 ou un phényle,
**R3** est un groupement méthyle,
**x** est égal à 0,
**y** est un nombre entier compris entre 1 et 500,
ou d'un mélange d'huiles de base polyalcoxysiloxanes de formule (I),
en tant qu'agent lubrifiant.

2. Utilisation selon la revendication 1, dans laquelle chaque **R1** est choisi indépendamment parmi les groupements méthyle et éthyle.

3. Utilisation selon la revendication 2, dans laquelle chaque **R1** est un groupe méthyle.

4. Utilisation selon l'une quelconque des revendications 1 à 3, dans laquelle chaque **R2** est indépendamment un groupement alkyle ou alcényle en C4 à C18, de préférence en C4 à C12.

5. Utilisation selon l'une quelconque des revendications 1 à 3, dans laquelle chaque **R2** est indépendamment un groupement alkyle ou alcényle C2 à C14 et un groupe phényl, de préférence le groupe phényl représente, en nombre, 70% ou moins, de préférence 60% ou moins, et typiquement 50% ou moins du motif répété y fois.

6. Utilisation selon l'une quelconque des revendications 1 à 5, dans laquelle y est compris entre 1 et 140.

7. Utilisation selon l'une quelconque des revendication 1 à 6, dans laquelle le polyalcoxysiloxane est choisi dans le groupe constitué par les polyalcoxysiloxanes de formule (I) dans lesquels:
x=0, y est compris entre 1 et 140, chaque R1 est un méthyle, chaque R3 est un méthyle et chaque R2 est une chaîne n-butyle,
x=0, y est compris entre 1 et 140, chaque R1 est un méthyle, chaque R3 est un méthyle et chaque R2 est une chaîne heptyle,
x=0, y est compris entre 1 et 140, chaque R1 est un méthyle, chaque R3 est un méthyle et chaque R2 est une chaîne dodécyle,
x=0, y est compris entre 1 et 140, chaque R1 est un méthyle, chaque R3 est un méthyle et chaque R2 est une chaîne tétradécyle, et
x=0, y est compris entre 1 et 140, chaque R1 est un méthyle, chaque R3 est un méthyle et chaque R2 est choisi dans le groupe constitué des chaînes octadécènyle et hexadécyle ;
x= 0, y est compris entre 1 et 140, chaque R1 est un méthyle, chaque R3 est un méthyle et chaque R2 est indépendamment un n-heptyle ou phényle, le phényle représentant, en nombre, 50% ou moins du motif répété y fois.

8. Utilisation d'une huile de base polyalcoxysiloxane de formule (I) telle que définie selon l'une quelconque des revendications 1 à 7 en mélange avec au moins une autre huile de base, en tant que co-base.

9. Composition lubrifiante, **caractérisée en ce qu'**elle comprend une huile de base polyalcoxysiloxane de formule (I) telle que définie selon l'une quelconque des revendications précédentes et au moins un additif.

10. Composition lubrifiante selon la revendication 9, dans laquelle ledit au moins un additif est choisi dans le groupe constitué par les additifs extrême-pression, les additifs anti-usure, les additifs détergents, les additifs modifiant la viscosité, les additifs anti-mousse, les additifs antioxydants, les retardateurs de flamme, les inhibiteurs de corrosion et une combinaison d'au moins deux desdits additifs.

11. Composition lubrifiante selon la revendication 9 ou 10, dans laquelle ladite composition comprend au moins un additif retardateur de flamme, de sorte à obtenir un fluide hydraulique non inflammable.

12. Polyalcoxysiloxane de formule (II): 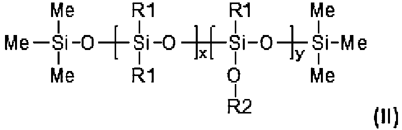 dans laquelle
chaque **R1** est indépendamment un groupement alkyle en C1 à C4,
chaque **R2** est indépendamment un groupement alkyle ou alcényle en C4 à C16 ou un phényle,
**x** vaut 0,
**y** est un nombre entier compris entre 1 et 500.

13. Polyalcoxysiloxane de formule (II) selon la revendication 12, dans lequel
chaque **R1** est choisi indépendamment parmi les groupements méthyle et éthyle ;
chaque **R2** est indépendamment un groupement alkyle ou alcényle en C4 à C14, de préférence en C4 à C12 ou une groupe phényle à la condition que lorsque R2 est un groupe phényl, celui-ci représente 50% ou moins du motif répété y fois ;
chaque **R3** est un groupement méthyle ;
x=0 ; et
y est compris entre 1 et 140.

14. Polyalcoxysiloxane de formule (II) selon la revendication 12 ou 13, choisi dans le groupe constitué des polyalcoxysiloxanes de formule (II) dans lesquels :
x=0, y est compris entre 1 et 140, chaque **R1** est un méthyle, et chaque **R2** est une chaîne n-butyle,
x=0, y est compris entre 1 et 140, chaque **R1** est un méthyle, et chaque **R2** est une chaîne heptyle,
x=0, y est compris entre 1 et 140, chaque **R1** est un méthyle, et chaque **R2** est une chaîne dodécyle,
x=0, y est compris entre 1 et 140, chaque **R1** est un méthyle, et chaque **R2** est une chaîne tétradécyle, et
x=0, y est compris entre 1 et 140, chaque **R1** est un méthyle, et chaque **R2** est choisi dans le groupe constitué des chaînes octadécènyle et hexadécyle ;
x= 0, y est compris entre 1 et 140, chaque R1 est un méthyle, chaque R3 est un méthyle et chaque R2 est indépendamment un n-heptyle ou phényle, le phényle représentant, en nombre, 50% ou moins du motif répété y fois.

## Patentansprüche

1. Verwendung eines Polyalkoxysiloxan-Basisöls der Formel (I) 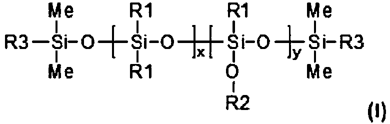 in der
R1 jeweils unabhängig eine C1- bis C4-Alkylgruppe ist,
R2 jeweils unabhängig eine C2- bis C22-Alkyl- oder Alkenylgruppe oder ein Phenyl ist,
R3 eine Methylgruppe ist,
x 0 ist,
y eine ganze Zahl zwischen 1 und 500 ist,
oder eines Gemischs von Polyalkoxysiloxan-Basisölen der Formel (I)
als Schmiermittel.

2. Verwendung gemäß Anspruch 1, wobei R1 jeweils unabhängig aus Methyl- und Ethylgruppen ausgewählt ist.

3. Verwendung gemäß Anspruch 2, wobei R1 jeweils eine Methylgruppe ist.

4. Verwendung gemäß einem der Ansprüche 1 bis 3, wobei R2 jeweils unabhängig eine C4- bis C18-Alkyl- oder Alkenylgruppe, vorzugsweise eine C4- bis C12-Alkyl- oder Alkenylgruppe, ist.

5. Verwendung gemäß einem der Ansprüche 1 bis 3, wobei R2 jeweils unabhängig eine C2- bis C14-Alkyl- oder Alkenylgruppe und eine Phenylgruppe ist, wobei die Phenylgruppe zahlenmäßig vorzugsweise höchstens 70%, vorzugsweise höchstens 60% und in der Regel höchstens 50% der y-mal wiederholten Einheit ausmacht.

6. Verwendung gemäß einem der Ansprüche 1 bis 5, wobei y zwischen 1 und 140 liegt.

7. Verwendung gemäß einem der Ansprüche 1 bis 6, wobei das Polyalkoxysiloxan aus der Gruppe ausgewählt ist, die aus Polyalkoxysiloxanen der Formel (I) besteht, bei denen:
x = 0 ist, y zwischen 1 und 140 liegt, R1 jeweils ein Methyl ist, R3 jeweils ein Methyl ist und R2 jeweils eine n-Butylkette ist,
x = 0 ist, y zwischen 1 und 140 liegt, R1 jeweils ein Methyl ist, R3 jeweils ein Methyl ist und R2 jeweils eine Heptylkette ist,
x = 0 ist, y zwischen 1 und 140 liegt, R1 jeweils ein Methyl ist, R3 jeweils ein Methyl ist und R2 jeweils eine Dodecylkette ist,
x = 0 ist, y zwischen 1 und 140 liegt, R1 jeweils ein Methyl ist, R3 jeweils ein Methyl ist und R2 jeweils eine Tetradecylkette ist, und
x = 0 ist, y zwischen 1 und 140 liegt, R1 jeweils ein Methyl ist, R3 jeweils ein Methyl ist und R2 jeweils aus der Gruppe ausgewählt ist, die aus Octadecenyl- und Hexadecylketten besteht;
x = 0 ist, y zwischen 1 und 140 liegt, R1 jeweils ein Methyl ist, R3 jeweils ein Methyl ist und R2 jeweils unabhängig ein n-Heptyl oder Phenyl ist, wobei das Phenyl zahlenmäßig höchstens 50% der y-mal wiederholten Einheit ausmacht.

8. Verwendung eines Polyalkoxysiloxan-Basisöls der Formel (I) nach einem der Ansprüche 1 bis 7 als Gemisch mit wenigstens einem anderen Basisöl als Cobasis.

9. Schmiermittelzusammensetzung, **dadurch gekennzeichnet, dass** sie ein Polyalkoxysiloxan-Basisöl der Formel (I) gemäß einem der vorstehenden Ansprüche und wenigstens ein Additiv umfasst.

10. Schmiermittelzusammensetzung gemäß Anspruch 9, wobei das wenigstens eine Additiv aus der Gruppe ausgewählt ist, die aus Extremdruckadditiven, Antiverschleißadditiven, waschaktiven Additiven, viskositätsmodifizierenden Additiven, Antischaumadditiven, Antioxidans-Additiven, Flammhemmern, Korrosionshemmern und einer Kombination von wenigstens zwei dieser Additive besteht.

11. Schmiermittelzusammensetzung gemäß Anspruch 9 oder 10, wobei die Zusammensetzung wenigstens ein flammhemmendes Additiv umfasst, sodass eine nicht entzündliche Hydraulikflüssigkeit erhalten wird.

12. Polyalkoxysiloxan der Formel (II): 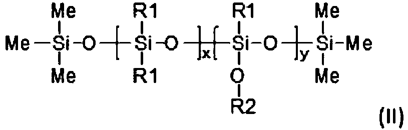 in der
R1 jeweils unabhängig eine C1- bis C4-Alkylgruppe ist,
R2 jeweils unabhängig eine C4- bis C16-Alkyl- oder Alkenylgruppe oder ein Phenyl ist,
x 0 ist,
y eine ganze Zahl zwischen 1 und 500 ist.

13. Polyalkoxysiloxan der Formel (II) gemäß Anspruch 12, wobei
R1 jeweils unabhängig aus Methyl- und Ethylgruppen ausgewählt ist;
R2 jeweils unabhängig eine C4- bis C14-Alkyl- oder Alkenylgruppe, vorzugsweise eine C4- bis C12-Alkyl- oder Alkenylgruppe, oder eine Phenylgruppe ist, und nur wenn R2 eine Phenylgruppe ist, diese höchstens 50% der y-mal wiederholten Einheit ausmacht;
R3 jeweils eine Methylgruppe ist;
x = 0 ist und
y zwischen 1 und 140 liegt.

14. Polyalkoxysiloxan der Formel (II) gemäß Anspruch 12 oder 13, das aus der Gruppe ausgewählt ist, die aus Polyalkoxysiloxanen der Formel (II) besteht, bei denen:
x = 0 ist, y zwischen 1 und 140 liegt, R1 jeweils ein Methyl ist und R2 jeweils eine n-Butylkette ist,
x = 0 ist, y zwischen 1 und 140 liegt, R1 jeweils ein Methyl ist und R2 jeweils eine Heptylkette ist,
x = 0 ist, y zwischen 1 und 140 liegt, R1 jeweils ein Methyl ist und R2 jeweils eine Dodecylkette ist,
x = 0 ist, y zwischen 1 und 140 liegt, R1 jeweils ein Methyl ist und R2 jeweils eine Tetradecylkette ist, und
x = 0 ist, y zwischen 1 und 140 liegt, R1 jeweils ein Methyl ist und R2 jeweils aus der Gruppe ausgewählt ist, die aus Octadecenyl- und Hexadecylketten besteht;
x = 0 ist, y zwischen 1 und 140 liegt, R1 jeweils ein Methyl ist, R3 jeweils ein Methyl ist und R2 jeweils unabhängig ein n-Heptyl oder Phenyl ist, wobei das Phenyl zahlenmäßig höchstens 50% der y-mal wiederholten Einheit ausmacht.

## Claims

1. Use of a polyalkoxysiloxane base oil of formula (I) 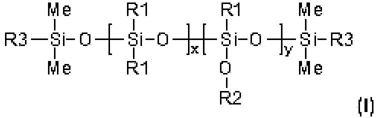 wherein
each **R1** is independently a C1 to C4 alkyl group,
each **R2** is independently a C2 to C22 alkyl or alkenyl group or a phenyl,
**R3** is a methyl group,
**x** is equal to 0,
**y** is an integer between 1 and 500,
or a mixture of polyalkoxysiloxane base oils of formula (I),
as lubricating agent.

2. Use according to claim 1, wherein each **R1** is independently selected from the methyl and ethyl groups.

3. Use according to claim 2, wherein each **R1** is a methyl group.

4. Use according to any one of claims 1 to 3, wherein each **R2** is independently a C4 to C18 alkyl or alkenyl group, preferably a C4 to C12.

5. Use according to any one of claims 1 to 3, wherein each **R2** is independently a C2 to C14 alkyl or alkenyl group and a phenyl group, preferably the phenyl group represents, in number, 70% or less, preferably 60% or less, and typically 50% or less of the unit repeated y times.

6. Use according to any one of claims 1 to 5, wherein y is between 1 and 140.

7. Use according to any one of claims 1 to 6, wherein the polyalkoxysiloxane is selected from the group consisting of the polyalkoxysiloxanes of formula (I) wherein:
x = 0, y is between 1 and 140, each **R1** is a methyl, each **R3** is a methyl and each **R2** is an n-butyl chain,
x = 0, y is between 1 and 140, each **R1** is a methyl, each **R3** is a methyl and each **R2** is a heptyl chain,
x = 0, y is between 1 and 140, each **R1** is a methyl, each **R3** is a methyl and each **R2** is a dodecyl chain,
x = 0, y is between 1 and 140, each **R1** is a methyl, each **R3** is a methyl and each **R2** is a tetradecyl chain, and
x = 0, y is between 1 and 140, each **R1** is a methyl, each **R3** is a methyl and each **R2** is selected from the group consisting of octadecenyl and hexadecyl chains;
x= 0, y is between 1 and 140, each **R1** is a methyl, each **R3** is a methyl and each **R2** is independently an n-heptyl or phenyl, phenyl representing, in number, 50% or less of the unit repeated y times.

8. Use of a polyalkoxysiloxane base oil of formula (I) such as defined in any one of claims 1 to 7, in mixture with at least one other base oil as a co-base.

9. Lubricating composition, **characterised in that** it comprises a polyalkoxysiloxane base oil of formula (I) such as defined in any one of the preceding claims and at least one additive.

10. Lubricating composition according to claim 9, wherein said at least one additive is selected from the group consisting of extreme-pressure additives, antiwear additives, detergent additives, viscosity-modifying additives, antifoaming additives, antioxidant additives, flame retardants, corrosion inhibitors and a combination of at least two of said additives.

11. Lubricating composition according to claim 9 or 10, wherein said composition comprises at least one flame-retarding additive, so as to obtain a non-flammable hydraulic fluid.

12. Polyalkoxysiloxane of formula (II): 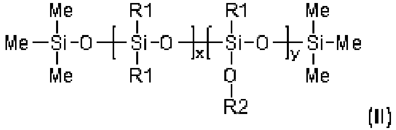 wherein
each **R1** is independently a C1 to C4 alkyl group,
each **R2** is independently a C4 to C16 alkyl or alkenyl group, or a phenyl,
x is 0,
y is an integer between 1 and 500.

13. Polyalkoxysiloxane of formula (II) according to claim 12, wherein
each **R1** is selected independently from a methyl and ethyl groups ;
each **R2** is independently a C4 to C14 alkyl or alkenyl group, preferably C4 to C12, or a phenyl group, provided that, when R2 is a phenyl group, the latter represents at least 50% of the unit repeated y times.
each **R3** is a methyl group;
x = 0; and
y is between 1 and 140.

14. Polyalkoxysiloxane of formula (I) according to claim 12 or 13, selected from the group consisting of the polyalkoxysiloxanes of formula (II) in which:
x = 0, y is between 1 and 140, each **R1** is a methyl, and each **R2** is an n-butyl chain,
x = 0, y is between 1 and 140, each **R1** is a methyl, and each **R2** is a heptyl chain,
x = 0, y is between 1 and 140, each **R1** is a methyl, and each **R2** is a dodecyl chain,
x = 0, y is between 1 and 140, each **R1** is a methyl, and each **R2** is a tetradecyl chain, and
x = 0, y is between 1 and 140, each **R1** is a methyl, and each R2 is selected from the group consisting of octadecenyl and hexadecyl chains,
x= 0, y is between 1 and 140, each **R1** is a methyl, each **R3** is a methyl, and each **R2** is independently an n-heptyl or phenyl, the phenyl representing, in number, 50% or less of the unit repeated y times.
